# EUROPÄISCHE PATENTANMELDUNG

(11) **EP 3 666 365 A1**
(43) Veröffentlichungstag der Anmeldung: **17.06.2020**
(21) Anmeldenummer: 18020638.5
(22) Anmeldetag: 14.12.2018
(51) Int. Cl.: B01D 53/14, C10K 1/00

(54) **VERFAHREN ZUR REGENERIERUNG EINES BELADENEN WASCHMITTELS AUS EINER PHYSIKALISCH WIRKENDEN GASWÄSCHE UND VORRICHTUNG FÜR EINE PHYSIKALISCH WIRKENDE GASWÄSCHE**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, 60486 Frankfurt (DE); Gubrinski, Alfred, 64390 Erzhausen (DE); Frey, Christian, 69181 Leimen (DE); Vidovic, Branislav, 60433 Frankfurt (DE); Szabo, Robert, 60326 Frankfurt (DE)
(74) Vertreter: Stang, Stefan

(57) **Zusammenfassung**

Die Erfindung betrifft ein Verfahren und eine Vorrichtung zur Regenerierung eines beladenen Waschmittels aus einer physikalisch wirkenden Gaswäsche. Die Gaswäsche umfasst mehrere Waschstufen in einer Absorptionsvorrichtung zur selektiven Entfernung unerwünschter Gasbestandteile aus einem Rohsynthesegas. In einer ersten Waschstufe wird ein erstes mit einer ersten Gaskomponente und zumindest einer zweiten Gaskomponente beladenes Waschmittel erhalten, welches aus der Absorptionsvorrichtung abgezogen und getrennt von weiteren Waschmitteln aus weiteren Waschstufen einer dedizierten Regeneriereinheit zur Abtrennung der zumindest einen Gaskomponente aus dem ersten beladenen Waschmittel zugeführt wird, wobei ein erstes regeneriertes Waschmittel erhalten wird. Erfindungsgemäß ist vorgesehen, dass das erste beladene Waschmittel nach dem Abziehen aus der Absorptionsvorrichtung einer ersten Druckentspannungseinheit zugeführt wird, bevor es der Regeneriereinheit zugeführt wird, wobei die zweite Gaskomponente abgetrennt wird um die Menge an recycelten Wertgasen zu erhöhen und die Gasbelastung der dedizierten Regeneriereinheit zu verringern.

## Beschreibung

### Gebiet der Erfindung

Die Erfindung betrifft ein Verfahren zur Regenerierung eines beladenen Waschmittels aus einer physikalisch wirkenden Gaswäsche. Die Erfindung betrifft ferner eine Vorrichtung für eine physikalisch wirkende Gaswäsche.

### Stand der Technik

Verfahren zur Abtrennung von unerwünschten Begleitstoffen aus technischen Rohsynthesegasen mittels physikalischer Absorption sind aus dem Stand der Technik bekannt. So können mit solchen Verfahren unerwünschte Bestandteile aus durch Vergasung oder Reformierung von kohlenstoffhaltigen Einsatzstoffen erzeugten Rohsynthesegasen, beispielsweise Kohlendioxid (CO₂), Schwefelwasserstoff (H₂S) und Carbonylsulfid (COS) von den erwünschten Synthesegasbestandteilen wie Wasserstoff (H₂) und Kohlenmonoxid (CO) bis in den Spurenbereich entfernt werden.

In diesen auch als Gaswäschen bezeichneten Verfahren werden die Eigenschaften von Flüssigkeiten ausgenutzt, gasförmige Stoffe zu absorbieren und physikalisch oder chemisch gebunden in Lösung zu halten. Wie gut ein Gas von einer Flüssigkeit absorbiert wird, wird durch den Absorptionskoeffizienten ausgedrückt. Je besser das Gas in der Flüssigkeit absorbiert oder gelöst wird, desto größer ist der Absorptionskoeffizient. Der Absorptionskoeffizient steigt im Allgemeinen mit sinkender Temperatur und, nach dem Gesetz von Henry, mit steigendem Druck. Die in Gaswäschen eingesetzten Flüssigkeiten werden allgemein auch als Waschmittel bezeichnet.

Bei der Gaswäsche aus dem Rohsynthesegas ausgewaschene Komponenten werden im Anschluss an die Gaswäsche aus dem beladenen Waschmittel entfernt, wodurch ein regeneriertes oder zumindest teilregeneriertes Waschmittel erhalten wird. Bekannte Verfahren zur Regenerierung des Waschmittels sind Druckentspannung (Flashen), Druckentspannung mit Stripp-Gas (Strippen) sowie Druckentspannung mit Stripp-Gas, wobei der Eigendampf des Waschmittels als Stripp-Gas verwendet wird (Heißregenerierung). Um für eine erneute Absorption von Gaskomponenten aus dem Rohsynthesegas verwendet werden zu können, wird das Waschmittel in der letzten Regenerationsstufe üblicherweise einer Heißregenerierung unterzogen. Durch die Heißregenerierung wird ein nahezu reines Waschmittel zurückgewonnen, welches sich für die erneute Absorption von unerwünschten Gasbestandteilen aus dem Rohsynthesegas eignet.

Ein für die Reinigung von Rohsynthesegasen bedeutsames Verfahren ist die auch als Rectisol-Verfahren bekannte Methanol-Wäsche, welche beispielsweise in UII-mann's Encyclopedia of Industrial Chemistry, 6. Aufl. Bd. 15, S. 399 ff. grundsätzlich beschrieben wird. Das Rectisol-Verfahren nutzt die Tatsache aus, dass sich die Absorptionskoeffizienten von H₂S, COS und CO₂ in flüssigem, tiefkaltem Methanol um mehrere Größenordnungen von denen von H₂ und CO unterscheiden. Das Methanol wird nach dem Waschvorgang regeneriert und wieder in den Prozess zurückgeführt.

Durch Substanzen wie Cyanwasserstoff (HCN) und niedere Alkylthiole (im Folgenden allgemein als "Mercaptane" bezeichnet), welche ebenfalls zumindest als Spurenbestandteile in Rohsynthesegasen vorhanden sind, wird die Regenerierung des Methanols erschwert, da HCN und Mercaptane aufgrund ihrer hohen Löslichkeitskoeffizienten physikalisch stark an das Methanol gebunden sind. Ein Verbleib und damit auch die Anreicherung von HCN oder Mercaptanen in Methanol ist jedoch zu vermeiden. HCN wirkt auf Anlagenbauteile stark korrosiv und ist toxisch. Mercaptane sind im gereinigten Synthesegas selbst in geringsten Mengen nicht tolerabel, da Mercaptane insbesondere aufgrund ihres Schwefelgehalts für nachgelagerte Syntheseprozesse Probleme darstellen, beispielsweise aufgrund der Wirkung des Schwefels als Katalysatorgift.

In einer besonderen Ausgestaltung des Rectisol-Verfahrens wird die Tatsache der hohen Absorptionskoeffizienten von HCN und Mercaptanen dahingehend ausgenutzt, dass diese im Rahmen einer Vorwäsche mit Hilfe einer relativ kleinen Menge Methanol aus dem Rohsynthesegas ausgewaschen werden. Die Vorwäsche wird hierbei in einer ersten Waschstufe einer mehrere Waschstufen umfassenden Absorptionsvorrichtung durchgeführt. Weitere Waschstufen beinhalten üblicherweise die selektive, das heißt getrennte Entfernung von Sauergasen wie H₂S, COS und CO₂ in einer Mehrzahl von Waschstufen.

Üblicherweise wird bei der Methanol-Wäsche mit HCN und/oder Mercaptanen beladenes Methanol einer Stripp-Kolonne zur Heißregenerierung mit Waschmittel-Dampf bei niedrigem Druck zugeführt. In der gleichen Stripp-Kolonne wird auch das mit Sauergasen beladene Methanol regeneriert. Bei der Heißregenerierung aus dem Waschmittel entferntes H₂S, COS und HCN/Mercaptane gelangen anschließend, nach dem Entfernen von Waschmittel-Resten durch Kondensation, gemeinsam in eine Claus-Anlage zur Herstellung von Schwefel, in der das in geringen Mengen anfallende HCN nicht stört. Die restlose Entfernung von HCN und Mercaptanen aus dem Waschmittelkreislauf, insbesondere im Rahmen der Heißregenerierung, ist aufgrund der hohen Absorptionskoeffizienten dieser Stoffe oft mit einem hohen anlagentechnischen und betrieblichen Aufwand verbunden. Soll ein solcher Aufwand aus beispielsweise wirtschaftlichen Gründen nicht betrieben werden, ist mit einer Anreicherung von HCN und/oder Mercaptanen im Waschmittelkreislauf zu rechnen, was langfristig zu korrosiven Schäden an der Anlage führen kann.

Aus diesem Grund schlägt die EP 1 839 727 A1 vor, aus der Vorwäsche abgezogenes beladenes Waschmittel einer gesonderten Stripp-Kolonne, unabhängig vom beladenen Waschmittel der weiteren Waschstufen, zuzuführen. Die vergleichsweise kleine Methanol-Menge der Vorwäsche wird somit einer eigenen Regeneriereinheit zugeführt und dort unter den für eine weitgehende HCN-Abtrennung notwendigen Betriebsbedingungen regeneriert.

Nachteilig am Verfahren der EP 1 839 727 A1 ist, dass das mit HCN beladene Methanol aus dem ersten Waschschritt unmittelbar von der Absorptionsvorrichtung in die Stripp-Kolonne (Regeneriereinheit) überführt wird. Im Methanol des ersten Waschschritts absorbierte Wertgase, insbesondere H₂ und CO, werden dadurch mit in die Regeneriereinheit überführt und gelangen nach dort erfolgter Strippung mit Methanol-Dampf unbeabsichtigt zusammen mit HCN und H₂S in die Claus-Anlage. Insbesondere größere CO Mengen können den Claus-Prozess negativ beeinträchtigen, da kohlenstoffhaltige Moleküle im Verfahren unerwünscht sind.

Weiterhin ist die Gasbelastung der gesonderten Stripp-Kolonne durch die Absorption von Wertgasen erhöht. Ferner finden sich im Methanol der Vorwäsche nicht unerhebliche Mengen an absorbiertem CO₂, dessen Hauptmenge in der Regel mit einer weiteren Waschstufe, beispielsweise mit der dritten Waschstufe, entfernt wird. Aufgrund der im Vorwasch-Methanol absorbierten Wertgase sowie aufgrund des absorbierten CO₂ ist die gesonderte Stripp-Kolonne somit größer auszulegen als eigentlich für die Entfernung von HCN und Mercaptanen erforderlich.

### Beschreibung der Erfindung

Eine Aufgabe der vorliegenden Erfindung besteht somit darin, die vorgenannten Nachteile des Standes der Technik zumindest teilweise zu überwinden.

Eine weitere Aufgabe der vorliegenden Erfindung besteht darin, ein Verfahren anzugeben, welches im Vergleich zum aus dem Stand der Technik bekannten Verfahren den Verlust an Wertgasen reduziert.

Eine weitere Aufgabe der vorliegenden Erfindung besteht darin, ein Verfahren anzugeben, welches im Vergleich zum aus dem Stand der Technik bekannten Verfahren die Menge an Wertgasen reduziert, die das Gaswäsche-Verfahren in Richtung Claus-Anlage verlässt.

Eine weitere Aufgabe der vorliegenden Erfindung besteht darin, ein Verfahren anzugeben, welches im Vergleich zum aus dem Stand der Technik bekannten Verfahren die Menge an kohlenstoffhaltigen Stoffen reduziert, welche das Gaswäsche-Verfahren in Richtung Claus-Anlage verlassen.

Eine weitere Aufgabe der vorliegenden Erfindung besteht darin, ein Verfahren anzugeben, welches im Vergleich zum aus dem Stand der Technik bekannten Verfahren die Gasbelastung der Stripp-Kolonne (Regeneriereinheit) verringert, so dass diese möglichst klein ausgelegt werden kann.

Eine weitere Aufgabe der vorliegenden Erfindung besteht darin, eine Vorrichtung anzugeben, die zumindest eine der vorgenannten Aufgaben wenigstens teilweise löst.

Die Aufgaben der Erfindung werden zumindest teilweise gelöst durch ein Verfahren zur Regenerierung eines beladenen Waschmittels aus einer physikalisch wirkenden Gaswäsche, bei dem die Gaswäsche mehrere Waschstufen in einer Absorptionsvorrichtung zur selektiven Entfernung unerwünschter Gasbestandteile aus einem Rohsynthesegas umfasst, wobei in einer ersten Waschstufe ein erstes mit einer ersten Gaskomponente und zumindest einer zweiten Gaskomponente beladenes Waschmittel erhalten wird und das erste beladene Waschmittel aus der Absorptionsvorrichtung abgezogen und getrennt von weiteren Waschmitteln aus weiteren Waschstufen einer dedizierten Regeneriereinheit zur Abtrennung der ersten Gaskomponente aus dem ersten beladenen Waschmittel zugeführt wird, wobei ein erstes regeneriertes Waschmittel erhalten wird. Erfindungsgemäß ist vorgesehen, dass das erste beladene Waschmittel nach dem Abziehen aus der Absorptionsvorrichtung einer ersten Druckentspannungseinheit zugeführt wird, bevor es der Regeneriereinheit zugeführt wird.

Durch die Verwendung einer Druckentspannungseinheit wird zumindest die zweite Gaskomponente teilweise oder vollständig entfernt. Durch die Druckentspannungseinheit werden somit teilweise oder vollständig diejenigen Gaskomponenten aus dem Waschmittel entfernt, welche nicht der ersten Gaskomponente entsprechen. Zumindest die zweite, oder eine oder mehrere weitere Gaskomponenten (beispielsweise eine dritte und vierte Gaskomponente) entsprechen nicht der ersten Gaskomponente. Nicht der ersten Gaskomponente entsprechende Gaskomponenten weisen in Bezug auf das Waschmittel einen niedrigeren Absorptionskoeffizienten auf als die erste Gaskomponente. Mit anderen Worten, die zweite und weitere Gaskomponenten weisen in Bezug auf das Waschmittel einen niedrigeren Absorptionskoeffizienten auf als die erste Gaskomponente. In der Druckentspannungseinheit wird der Druck des mit der ersten Gaskomponente und zumindest der zweiten Gaskomponente beladenen ersten Waschmittels soweit abgesenkt, dass nicht der ersten Gaskomponente entsprechende Gaskomponenten ausgasen beziehungsweise die zumindest zweite Gaskomponente ausgast und so aus der Druckentspannungseinheit abgezogen werden können/kann. Bei der zweiten Gaskomponenten handelt es sich in einem Beispiel um sehr schwach im Waschmittel absorbierende Gase, wie Wertgase aus dem Rohsynthesegas, insbesondere H₂ und/oder CO. In einem weiteren Beispiel handelt es sich bei der zweiten oder einer weiteren Gaskomponente um eine Gaskomponente, welche in Bezug auf das Waschmittel einen deutlich niedrigeren Absorptionskoeffizienten als die erste Gaskomponente aufweist. In einem Beispiel mit Methanol als Waschmittel ist die zweite Gaskomponente CO₂, und die erste Gaskomponente ist HCN, ein Mercaptan oder ein Gemisch daraus.

In Zusammenhang mit Gegenständen der Erfindung ist unter einer "Gaskomponente" entweder ein einzelnes Gas oder ein Gemisch aus Gasen zu verstehen.

In Zusammenhang mit Gegenständen der Erfindung ist unter einer "Druckentspannungseinheit" eine Vorrichtung zu verstehen, welche einer Druckabsenkung dient, welche darin resultiert, dass nicht der ersten Gaskomponente entsprechende Gaskomponenten (die zweite und optional weitere Gaskomponenten) aus dem ersten Waschmittel teilweise, vorzugsweise vollständig durch Desorption entfernt werden. Dabei findet eine Druckabsenkung gegenüber dem in der Absorptionsvorrichtung herrschenden Druck statt. Die Druckentspannungseinheit kann einen oder mehrere Druckentspannungsbehälter oder Flash-Behälter aufweisen. Der Ausdruck "erste Druckentspannungseinheit" bedeutet, dass im erfindungsgemäßen Verfahren weitere Druckentspannungseinheiten vorhanden sein können.

In Zusammenhang mit Gegenständen der Erfindung ist unter einer "Regeneriereinheit" eine Vorrichtung zu verstehen, welche dazu dient, zumindest die erste Gaskomponente aus dem Waschmittel zu entfernen. Optional werden durch die Regeneriereinheit zusätzlich restliche Gase entfernt, welche nicht der ersten Gaskomponente entsprechen, somit nicht vollständig durch die Druckentspannungseinheit entfernt wurden, beispielsweise Gase der zweiten Gaskomponente. Durch die Regeneriereinheit wird ein vollständig regeneriertes Waschmittel erzeugt. Das durch die Regeneriereinheit vollständig regenerierte Waschmittel weist eine Reinheit von wenigstens 99 Gew.-% auf, oder wenigstens 99,5 Gew.-%, oder wenigstens 99,9 Gew.-%. Die Regeneriereinheit umfasst in einem Beispiel eine Vorrichtung zum Erhitzen des Waschmittels, wodurch Waschmitteldampf entsteht, welcher die Desorption der ersten Gaskomponente und optional der zweiten und weiterer Gaskomponenten bewirkt. In einem weiteren Beispiel umfasst die Regeneriereinheit eine Vorrichtung zum Einleiten eines Inertgases, wie Stickstoff, durch welches die Desorption der ersten Gaskomponente und optional weiterer Gaskomponenten bewirkt wird. In einem weiteren Beispiel umfasst die Regeneriereinheit eine Vorrichtung zur Druckabsenkung gegenüber dem in der Druckentspannungseinheit herrschenden Druck sowie wie vorgenannt eine Vorrichtung zum Erhitzen des Waschmittels oder eine Vorrichtung zum Einleiten eines Inertgases.

Das erfindungsgemäße Verfahren zeichnet sich durch die Verwendung einer ersten Druckentspannungseinheit aus. Nicht der ersten Gaskomponente entsprechende Gaskomponenten, beispielsweise H₂, CO und/oder CO₂, werden durch die erste Druckentspannungseinheit teilweise oder vollständig entfernt und können dadurch aus dieser abgezogen werden, wodurch diese weiteren Gaskomponenten nicht der Regeneriereinheit zugeführt werden. Dies hat eine Reihe von Vorteilen, nämlich dass
- die Menge an recycelten Wertgasen im Produktstrom (Strom gereinigten Synthesegases) erhöht wird, in dem diese aus der Druckentspannungseinheit abgezogen und zur Absorptionsvorrichtung zurückgeführt werden,
- die Gasbelastung für die Regeneriereinheit verringert wird, wodurch diese kleiner ausgelegt werden kann, und
- in der Druckentspannungseinheit hauptsächlich schwefelfreie und kohlenstoffhaltige Gaskomponenten entfernt werden, da diese in der Regel einen niedriaeren Absorotionskoeffizienten als schwefelhaltiae Gaskomoonenten aufweisen, wodurch in der Massenbilanz weniger Kohlenstoff die Regeneriereinheit verlässt, was vorteilhaft für eine nachgeschaltete Claus-Anlage ist.

Erfindungsgemäß wird unter einer "dedizierten" Regeneriereinheit eine Regeneriereinheit verstanden, welche ausschließlich der Regenerierung des ersten Waschmittels aus der ersten Waschstufe dient. Für weitere Waschmittel aus weiteren Waschstufen der Absorptionsvorrichtung, beispielsweise einem zweiten Waschmittel aus einer zweiten Waschstufe, oder einem zweiten und dritten Waschmittel aus einer zweiten und dritten Waschstufe, ist eine weitere Regeneriereinheit vorgesehen.

Eine bevorzugte Ausführungsform des erfindungsgemäßen Verfahrens ist dadurch gekennzeichnet, dass das erste beladene Waschmittel vor dem Zuführen zur Regeneriereinheit erwärmt wird, vorzugsweise durch aus einer weiteren Regeneriereinheit abgezogene Sauergase erwärmt wird. Durch die Desorption von Gasen, insbesondere der nicht der ersten Gaskomponente entsprechenden weiteren Gaskomponenten, kühlt sich das erste beladene Waschmittel ab und wird anschließend vor dem Zuführen zur Regeneriereinheit erwärmt, was in vorteilhafter Weise durch Sauergase erfolgt, welche aus der weiteren Regeneriereinheit abgezogen werden. Die Heizlast der dedizierten Regeneriereinheit wird durch diese Maßnahme gesenkt und die Wärmeintegration des Verfahrens optimiert.

Eine bevorzugte Ausführungsform des erfindungsgemäßen Verfahrens ist dadurch gekennzeichnet, dass die erste Druckentspannungseinheit zwei, optional mehr als zwei hintereinandergeschaltete Druckentspannungsstufen aufweist, wobei das erste beladene Waschmittel in der ersten Druckentspannungsstufe vorzugsweise auf einen Druck entspannt wird, der um einen Faktor von 1,5 bis 4 kleiner ist als der in der Absorptionsvorrichtung vorherrschende Druck, und in der zweiten Druckentspannungsstufe vorzugsweise auf einen Druck entspannt wird, der um einen Faktor von 1,5 bis 4 kleiner ist als der in der ersten Druckentspannungsstufe vorherrschende Druck. Weiter bevorzugt wird das erste beladene Waschmittel in der ersten Druckentspannungsstufe auf einen Druck entspannt, der um einen Faktor von 2 bis 3 kleiner ist als der in der Absorptionsvorrichtung vorherrschende Druck, und in der zweiten Druckentspannungsstufe auf einen Druck entspannt, der um einen Faktor von 2 bis 3 kleiner ist als der in der ersten Druckentsoannunasstufe vorherrschende Druck.

In einem Beispiel beträgt der in der Absorptionsvorrichtung vorherrschende Druck 20 bis 100 bar, und der in der ersten und zweiten Druckentspannungsstufe vorherrschende Druck ist entsprechend der vorgenannten Faktoren kleiner. Die vorgenannten Faktoren, das heißt Druckstufen, resultieren in einem optimalen Kompressionsverhältnis für die den Druckentspannungsstufen nachgeschalteten Verdichtern (Kompressoren), welche zur Rückverdichtung der aus den Druckentspannungsstufen ausgasenden Gase auf Absorptionsdruck (den in der Absorptionsvorrichtung vorherrschenden Druck) benötigt werden. Es wurde festgestellt dass weitere Verdichter erforderlich werden, wenn die vorgenannten Faktoren überschritten werden. Werden die vorgenannte Faktoren hingegen unterschritten, ist die in den Druckentspannungsstufen ausgasende Menge an weiteren Gaskomponenten zu klein, was eine Vergrößerung der Zahl der Druckentspannungsstufen zur Folge hätte.

Eine bevorzugte Ausführungsform des erfindungsgemäßen Verfahrens ist dadurch gekennzeichnet, dass eine Druckentspannungsstufe einen Flash-Behälter umfasst. Eine Druckentspannungsstufe besteht in einem Beispiel aus einem Flash-Behälter mit benötigtem technischem Equipment (zum Beispiel Mess- und Regelvorrichtungen, Zu- und Ableitungen), das heißt jeder Druckentspannungsstufe ist genau ein Flash-Behälter mit benötigtem zusätzlich benötigtem technischem Equipment zuzuordnen. Wie oben bereits erwähnt kann die "Druckentspannungseinheit" hingegen eine oder mehrere Druckentspannungsstufen, somit einen oder mehrere Flash-Behälter umfassen.

Eine bevorzugte Ausführungsform des erfindungsgemäßen Verfahrens ist dadurch gekennzeichnet, dass das erste beladene Waschmittel Cyanwasserstoff (HCN) und/oder Mercaptane sowie optional Schwefelwasserstoff (H₂S) und/oder Carbonylsulfid (COS) als erste Gaskomponente enthält. Mit Hilfe des erfindungsgemäßen Verfahrens werden bevorzugt HCN und/oder Mercaptane als erste Gaskomponente aus dem ersten Waschmittel abgetrennt, wobei die Desorption der vorgenannten Gaskomponente vorzugsweise vollständig oder im Wesentlichen vollständig in der dedizierten Regeneriereinheit erfolgt. Die erste Gaskomponente kann optional kleinere Restmengen an H₂S und/oder COS enthalten. Diese schwefelhalten Substanzen werden jedoch vorzugsweise in einer der weiteren Absorptionsstufen, vorzugsweise der zweiten Absorptionsstufe, absorbiert und in der weiteren Regeneriereinheit desorbiert.

Eine bevorzugte Ausführungsform des erfindungsgemäßen Verfahrens ist dadurch gekennzeichnet, dass bei der Druckentspannung als zweite Gaskomponente freigesetzte Wertgase, insbesondere Wasserstoff (H₂) und/oder Kohlenmonoxid (CO), aus der ersten Druckentspannungseinheit abgezogen, anschließend verdichtet und zur Absorptionsvorrichtung zurückgeführt werden. Dadurch werden durch die Druckentspannung freigesetzte Wertgase recycelt. Ohne die erfindungsgemäße Druckentspannungseinheit würden diese Wertgase über die dedizierte Regeneriereinheit mit den übrigen Sauergasen abgeführt und wären dementsprechend nicht recycelbar.

Eine bevorzugte Ausführungsform des erfindungsgemäßen Verfahrens ist dadurch gekennzeichnet, dass die weiteren Waschstufen zumindest eine zweite und eine dritte Waschstufe umfassen, wobei in der zweiten Waschstufe ein zweites beladenes Waschmittel erhalten wird und in der dritten Waschstufe ein drittes beladenes Waschmittel erhalten wird.

Vorzugsweise wird dabei das zweite beladene Waschmittel einer zweiten Druckentspannungseinheit zugeführt, und das dritte beladene Waschmittel einer dritten Druckentspannungseinheit zugeführt, und aus der zweiten und dritten Druckentspannungseinheit abgezogene Wertgase, insbesondere Wasserstoff (H₂) und/oder Kohlenmonoxid (CO), werden mit den aus der ersten Druckentspannungseinheit abgezogenen Wertgasen zusammengeführt, anschließend verdichtet und zur Absorptionsvorrichtung zurückgeführt. Bei dieser Art der Verfahrensführung ist der apparative Aufwand am geringsten, bei gleichzeitig maximaler Menge an recycelbaren Wertgasen, welche zur Absorptionsvorrichtung zurückgeführt werden können.

Eine bevorzugte Ausführungsform des erfindungsgemäßen Verfahrens ist dadurch gekennzeichnet, dass in der zweiten Waschstufe ein zumindest mit Schwefelwasserstoff (H₂S) sowie optional Carbonylsulfid (COS) beladenes zweites beladenes Waschmittel erhalten wird und in der dritten Waschstufe ein zumindest mit Kohlendioxid (CO₂) beladenes drittes beladenes Waschmittel erhalten wird.

Entsprechend der Abstufung der Absorptionskoeffizienten der zu entfernenden Gase in Bezug auf das Waschmittel erfolgt in einem Beispiel die Abtrennung von HCN und/oder Mercaptanen mit der ersten Waschstufe und der dedizierten Regeneriereinheit, die Abtrennung von H₂S sowie optional COS mit der zweiten Waschstufe und der weiteren Regeneriereinheit, und die Abtrennung von CO₂ mit der dritten Waschstufe und der weiteren Regeneriereinheit. Die Absorptionskoeffizienten der einzelnen Gase sinken dabei von Waschstufe zu Waschstufe, sind somit bei der ersten Waschstufe höher als bei der zweiten Waschstufe, und so weiter. Allgemein ist der Absorptionskoeffizient des jeweils absorbierten Gases in der n-ten Waschstufe höher als in der n+1-ten Waschstufe.

Eine bevorzugte Ausführungsform des erfindungsgemäßen Verfahrens ist dadurch gekennzeichnet, dass das Waschmittel ausgewählt ist aus der Gruppe umfassend Methanol, *N*-Methyl-2-pyrrolidion (NMP), Polyethylenglykol dimethylether (DMPEG), n-Oligoethylenglycol-methyl-isopropylether (MPE), *N*-Methylcaprolactam (NMC) oder Kombinationen davon. Vorzugsweise handelt es sich bei dem Waschmittel um Methanol, welches im Standard-Rectisolverfahren oder im selektiven Rectisolverfahren zum Einsatz kommt.

Entsprechend der Abstufung der Absorptionskoeffizienten der zu entfernenden Gase in Bezug auf Methanol erfolgt in einem Beispiel die Abtrennung von HCN und/oder Mercaptanen mit der ersten Waschstufe und der dedizierten Regeneriereinheit, die Abtrennung von H₂S sowie optional COS mit der zweiten Waschstufe und der weiteren Regeneriereinheit, und die Abtrennung von CO₂ mit der dritten Waschstufe und der weiteren Regeneriereinheit.

Eine bevorzugte Ausführungsform des erfindungsgemäßen Verfahrens ist dadurch gekennzeichnet, dass die Regeneriereinheit eine Vorrichtung zum Strippen und/oder Heißregenerieren umfasst, vorzugsweise eine Vorrichtung zum Heißregenerieren umfasst. Weist die erste Gaskomponente in Bezug auf das Waschmittel einen hohen Absorotionskoeffizienten auf, ist in der Regel die Entfernung durch Heißreaenerieren, das heißt Einwirkung von Waschmitteldampf, erforderlich. Dies ist beispielsweise im Falle von HCN als zu entfernender Komponente und Methanol als Waschmittel der Fall.

Eine bevorzugte Ausführungsform des erfindungsgemäßen Verfahrens ist dadurch gekennzeichnet, dass in der Regeneriereinheit abgetrennte Gaskomponenten von mitausgetriebenem Waschmittel durch Kondensation des Waschmitteldampfs befreit werden, und die abgetrennten Gaskomponenten, insbesondere aufweisend Cyanwasserstoff (HCN) und/oder Mercaptane sowie optional Schwefelwasserstoff (H₂S), einer Schwefel-Rückgewinnungsanlage zugeführt werden. Insbesondere im Falle einer Heißregenerierung kann das in der Regeneriereinheit ausgetriebene Gas nicht unerhebliche Mengen an dampfförmigem Waschmittel enthalten, weshalb die Kondensation der Waschmitteldämpfe erforderlich werden kann, um beispielsweise den Kohlenstoff-Gehalt der der Schwefel-Rückgewinnungsanlage zugeführten Gas möglichst gering zu halten.

Eine bevorzugte Ausführungsform des erfindungsgemäßen Verfahrens ist dadurch gekennzeichnet, dass das erste regenerierte Waschmittel aus der Regeneriereinheit abgezogen und einer destillativen Reinigung unterzogen wird. Dabei werden beispielsweise kleinere durch das Gaswäscheverfahren eingebrachte Wassermengen vom Waschmittel abgetrennt. Auch die aus weiteren Regeneriereinheiten abgezogenen Waschmittelströme werden einer destillativen Aufbereitung unterzogen. Vorzugsweise handelt es sich bei der destillativen Reinigung um eine Rektifikation.

Die Aufgaben der Erfindung werden ferner zumindest teilweise gelöst durch eine Vorrichtung für eine physikalisch wirkende Gaswäsche, aufweisend eine Mehrzahl von Waschstufen in einer Absorptionsvorrichtung, wobei in der Mehrzahl von Waschstufen unerwünschte Gasbestandteile durch Absorption durch ein Waschmittel aus einem Rohsynthesegas selektiv entfernbar sind; eine dedizierte Regeneriereinheit, wobei zwischen der dedizierten Regeneriereinheit und einer ersten der Mehrzahl von Waschstufen eine Fluidverbindung besteht, so dass in der dedizierten Regeneriereinheit ausschließlich im Waschmittel der ersten Waschstufe absorbierte Gasbestandteile entfernbar sind. Erfindungsgemäß ist vorgesehen, dass zwischen der ersten Waschstufe und der dedizierten Regeneriereinheit eine erste Druckentspannungseinheit mit Fluidverbindung zur ersten Waschstufe und zur dedizierten Regeneriereinheit angeordnet ist.

Die erfindungsgemäße Vorrichtung weist eine dedizierte Fluidverbindung zwischen der ersten der Mehrzahl von Waschstufen und der dedizierten Regeneriereinheit auf. Die Fluidverbindung dient als Leitung zwischen der ersten Waschstufe und der dedizierten Regeneriereinheit, so dass ausschließlich das Waschmittel der ersten Waschstufe in der dedizierten Regeneriereinheit regeneriert wird. Waschmittel der weiteren Waschstufen, beispielsweise einer zweiten und dritten Waschstufe, werden in einer oder mehreren weiteren, nicht dedizierten, Regeneriereinheiten regeneriert und weisen gesonderte Fluidverbindungen auf. Zwischen der ersten Waschstufe und der dedizierten Regeneriereinheit ist ferner eine Druckentspannungseinheit angeordnet, die eine Fluidverbindung zur ersten Waschstufe und zur dedizierten Regeneriereinheit aufweist. Somit sind die erste Waschstufe, die erste Druckentspannungseinheit und die dedizierte Regeneriereinheit durch eigene Fluidverbindungen miteinander verbunden. Die erste Druckentspannungseinheit ermöglicht beispielsweise die Desorption von Wertgasen aus dem ersten Waschmittel, wie oben ausführlich erläutert.

Eine bevorzugte Ausführungsform der erfindungsgemäßen Vorrichtung ist somit dadurch gekennzeichnet, dass zwischen der ersten Druckentspannungseinheit und der Absorptionsvorrichtung über Fluidverbindungen ein Kompressor zum Verdichten von aus der ersten Druckentspannungseinheit abziehbaren Wertgasen, insbesondere Wasserstoff (H₂) und/oder Kohlenmonoxid (CO), angeordnet ist, so dass verdichtete Wertgase zur Absorptionsvorrichtung zurückführbar sind. Somit sind aus dem ersten Waschmittel desorbierte Wertgase voll recycelfähig.

Eine bevorzugte Ausführungsform der erfindungsgemäßen Vorrichtung ist dadurch gekennzeichnet, dass die Absorptionsvorrichtung eine zweite und eine dritte Waschstufe aufweist, und zwischen der zweiten Waschstufe und dem Kompressor über Fluidverbindungen eine zweite Druckentspannungseinheit angeordnet ist, so-wie zwischen der dritten Waschstufe und dem Kompressor über Fluidverbindungen eine dritte Druckentsoannunaseinheit angeordnet ist. so dass verdichtete Wertgase aus der ersten Druckentspannungseinheit, der zweiten Druckentspannungseinheit, und der dritten Druckentspannungseinheit gemeinsam zur Absorptionseinheit zurückführbar sind. Durch diese Art der Verfahrensführung werden auch aus weiteren Waschstufen stammende, über weitere Druckentspannungseinheiten desorbierte Wertgase gemeinsam mit den Wertgasen aus der ersten Druckentspannungseinheit zur Absorptionsvorrichtung zurückgeführt. Für die Verdichtung auf Absorptionsdruck (letzte Verdichtungsstufe) wird dabei ein gemeinsamer Kompressor genutzt, was den apparativen Aufwand vereinfacht.

### Ausführungs- und Zahlenbeispiel

Die Erfindung wird im Folgenden durch ein Beispiel näher erläutert, ohne den Gegenstand der Erfindung zu beschränken. Weitere Merkmale, Vorteile und Anwendungsmöglichkeiten der Erfindung ergeben sich aus der nachfolgenden Beschreibung des Ausführungsbeispiels in Zusammenhang mit den Zeichnungen und einem Zahlenbeispiel.

Es zeigt
- Figur 1: eine schematische Fließbilddarstellung eines Verfahren beziehungsweise einer Vorrichtung 100 zur Regenerierung eines beladenen Waschmittels nach dem Stand der Technik und
- Figur 2: eine schematische Fließbilddarstellung eines Verfahrens beziehungsweise einer Vorrichtung 200 zur Regenerierung eines beladenen Waschmittels nach einer beispielhaften Ausführungs-form der Erfindung, aufweisend eine zwischen der ersten Waschstufe und der dedizierten Regeneriereinheit angeordnete erste Druckentspannungseinheit.

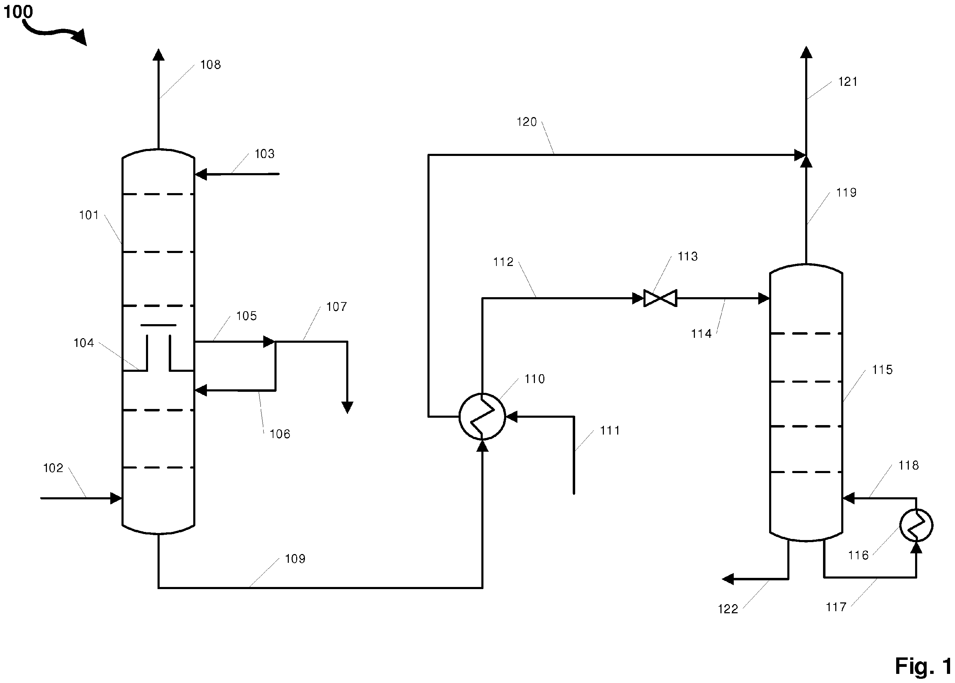

Gemäß dem Verfahren 100 beziehungsweise der Vorrichtung 100 nach Figur 1 wird einer Absorptionsvorrichtung 101 über Leitung 102 ein Rohsynthesegas zugeführt, welches als Komponenten zumindest die Wertgase CO und H₂ sowie als unerwünschte Bestandteile HCN, Mercaptane, H₂S, COS sowie CO₂ enthält. Das Rohsynthesegas durchströmt die Absorptionsvorrichtung 101 von unten nach oben, im Gegenstrom mit über Leitung 103 von oben zugeführtem regeneriertem Methanol. Die Absorptionsvorrichtung 101 weist einen Kaminboden 104 auf, welcher die erste, untere Waschstufe von oberhalb des Kaminbodens angeordneten, weiteren Waschstufen trennt. Die weiteren Waschstufen umfassen eine zweite, oberhalb des Kaminbodens 104 angeordnete Waschstufe, sowie einen weiteren oberhalb der zweiten Waschstufe angeordneten Kaminboden und eine dritte, oberhalb dieses oberen Kaminbodens angeordnete Waschstufe (nicht gezeigt). In der ersten Waschstufe werden die in geringen Mengen im Rohsynthesegas vorhandenen Bestandteile HCN und Mercaptane absorbiert, indem ein kleiner Teilstrom des aus der zweiten Waschstufe stammenden, bereits mit H₂S und COS beladenen Methanols, welches über Leitung 105 abgezogen wird, abgezweigt und über Leitung 106 der ersten Waschstufe zugeführt wird. Der Großteil des über Leitung 105 abgezogenen beladenen Waschmittelstroms wird über Leitung 107 zunächst einer Druckentspannungseinheit und anschließend einer Heißregenerierung im Haupt-Heißregenerator ("weitere Regeneriereinheit" im Sinne der Erfindung, nicht gezeigt) sowie einer destillativen Reinigung zugeführt (Schritte nicht gezeigt), bevor es in regenerierter Form über Leitung 103 der Absorptionsvorrichtung zugeführt wird. Nachdem das Rohsynthesegas die drei Waschstufen in Absorptionsvorrichtung 101 durchlaufen hat, verlässt es als gereinigtes Synthesegas, nunmehr nur die Komponenten H₂ und CO aufweisend, die Absorptionsvorrichtung 101 über Leitung 108.

Aus der ersten Waschstufe abgezogenes, mit HCN, Mercaptanen sowie H₂S, COS und Wertgasen beladenes Methanol wird über Leitung 109 abgezogen und zunächst in einem indirekten Wärmeaustauscher 110 vorgeheizt. Die Wärme in Wärmeaustauscher 110 wird durch ein Sauergas aus einem Haupt-Heißregenerator ("weitere Regeneriereinheit im Sinne der Erfindung, nicht gezeigt) auf das beladene Methanol aus Leitung 109 übertragen. Besagtes Sauergas wurde durch Heißregenerieren des Methanols aus der zweiten und dritten Waschstufe erhalten und wird dem Wärmeaustauscher 110 über Leitung 111 zugeführt. Durch den Wärmeaustauch erwärmtes Methanol gelangt über Leitung 112, Druckminderungsventil 113 und Leitung 114 in den Heißregenerator 115 ("dedizierte Regeneriereinheit" im Sinne der Erfindung). Heißregenerator 115 verfügt über einen Aufkocher 116, welcher über Leitung 117 aus dem Heißregenerator abgezogenes Methanol zum Sieden erhitzt und über Leitung 118 in den Heißregenerator 115 zurückführt. Durch Methanoldampf ausgetriebene Gase verlassen den Heißregenerator 115 über Leitung 119 und werden mit aus dem Haupt-Heißregenerator stammenden, in Wärmeaustauscher 110 abgekühlten Sauergasen aus Leitung 120 in Leitung 121 zusammengeführt. Sauergase in Leitung 121 werden in einem Abscheider von Methanol befreit und anschließend beispielsweise einer Claus-Anlage (nicht gezeigt) zur Rückgewinnung von Schwefel zugeführt. Regeneriertes Methanol wird aus dem Heißregenerator 115 über Leitung 122 abgezogen und einer destillativen Reinigung zugeführt (nicht gezeigt).

Nachteilig an dieser Art der Verfahrensführung ist, dass der Gasstrom in Leitung 119 in Bezug auf den Gesamtstrom in Leitung 121 zwar einen geringen, jedoch trotzdem störenden Anteil an Wertgasen (CO, H₂) sowie H₂S, COS und CO₂. Im Sinne der Erfindung erfolgt somit keine Trennung der ersten und zweiten Gaskomponente. Die Gaswäscheanlage in Richtung Claus-Anlage verlassende kohlenstoffhaltige Gase stören den Claus-Prozess, ferner wird der in der ersten Waschstufe absorbierte Anteil an Wertgasen nicht als Recycle-Gas zur Absorptionsvorrichtung zurückgeführt, vermindert also die Ausbeute an gereinigtem Synthesegas in Leitung 108.

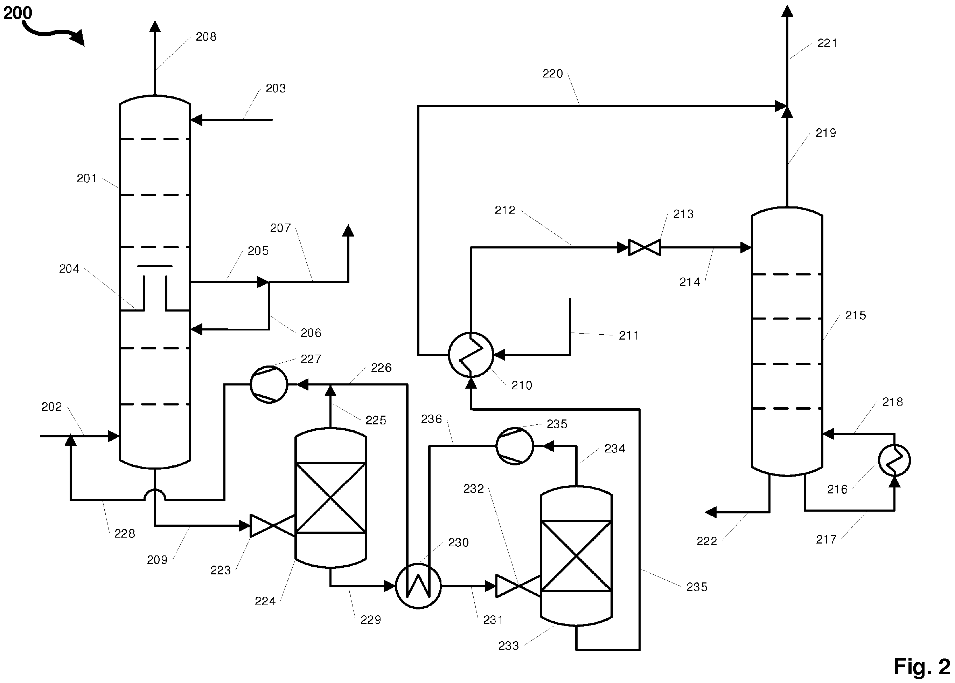

Vorgenannte Probleme werden gemäß dem erfindungsgemäßen Verfahren 200 beziehungsweise der erfindungsgemäßen Vorrichtung 200 nach Figur 2 gelöst.

Einer Absorptionsvorrichtung 201 wird über Leitung 202 ein Rohsynthesegas zugeführt, welches als Komponenten zumindest die Wertgase CO und H₂ sowie als unerwünschte Bestandteile HCN, Mercaptane, H₂S, COS sowie CO₂ enthält. Das Rohsynthesegas durchströmt die Absorptionsvorrichtung 201 von unten nach oben, im Gegenstrom mit über Leitung 203 von oben zugeführtem regeneriertem Methanol. Die Absorptionsvorrichtung 201 weist einen Kaminboden 204 auf, welcher die erste, untere Waschstufe von oberhalb des Kaminbodens angeordneten, weiteren Waschstufen trennt. Die weiteren Waschstufen umfassen eine zweite, oberhalb des Kaminbodens 204 angeordnete Waschstufe, sowie einen weiteren oberhalb der zweiten Waschstufe angeordneten Kaminboden und eine dritte, oberhalb dieses oberen Kaminbodens angeordnete Waschstufe (nicht gezeigt). In der ersten Waschstufe werden die in geringen Mengen im Rohsynthesegas vorhandenen Bestandteile HCN und Mercaptane absorbiert, indem ein kleiner Teilstrom des aus der zweiten Waschstufe stammenden, bereits mit H₂S und COS beladenen Methanols, welches über Leitung 205 abgezogen wird, abgezweigt und über Leitung 206 der ersten Waschstufe zugeführt wird. Der Großteil des über Leitung 205 abgezogenen beladenen Waschmittelstroms wird über Leitung 207 zunächst einer Druckentspannungseinheit und anschließend einer Heißregenerierung im Haupt-Heißregenerator ("weitere Regeneriereinheit" im Sinne der Erfindung, nicht gezeigt) sowie einer destillativen Reinigung zugeführt (Schritte nicht gezeigt), bevor es in regenerierter Form über Leitung 203 zur Absorptionsvorrichtung zurückgeführt wird. Nachdem das Rohsynthesegas die drei Waschstufen in Absorptionsvorrichtung 201 durchlaufen hat, verlässt es als gereinigtes Synthesegas, nunmehr nur die Komponenten H₂ und CO aufweisend, die Absorptionsvorrichtung 201 über Leitung 208.

Von der Verfahrensführung gemäß Figur 1 unterscheidet sich das Verfahren 200 oder die Vorrichtung 200 dadurch, dass zwischen der ersten Waschstufe der Absorptionsvorrichtung 201 und dem Heißregenerator 215 ("dedizierte Regeneriereinheit" im Sinne der Erfindung) eine Druckentspannungseinheit angeordnet ist, welche mehrere Druckentspannungsstufen in Form von Flash-Behältern umfasst. Das aus der ersten Waschstufe der Absorptionsvorrichtung 201 über Leitung 209 abgezogene, mit HCN, Mercaptanen, H₂S, COS sowie CO₂ beladene Methanol ("erstes Waschmittel" im Sinne der Erfindung) wird zunächst über Druckminderungsventil 223 in die als Flash-Behälter ausgestaltete Druckentspannungsstufe 224 hinein entspannt. Durch die Druckentspannung in Druckentspannungsstufe 224 desorbierte Wertgase (H₂ und CO) werden über Leitung 225 abgezogen, über Leitung 226 einem Kompressor 227 zugeführt und dadurch auf Absorptionsdruck zurückverdichtet. Die auf Absorptionsdruck zurückverdichteten Gase werden als Recycle-Gase anschließend über Leitung 228 zum Rohsynthesegasstrom in Leitung 202 zurückgeführt. Zumindest (noch) mit HCN, Mercaptanen, H₂S, COS und CO₂ beladenes Methanol wird über Leitung 229 zunächst einem indirekten Wärmeaustauscher 230 zugeführt und dadurch erwärmt, bevor es über Leitung 231 und Druckminderungsventil 232 weiter in die als Flash-Behälter ausgestaltete Druckentspannungsstufe 233 hinein entspannt wird. Die Druckentspannungsstufen 224 und 233 bilden gemeinsam eine Druckentspannungseinheit im Sinne der Erfindung. In Druckentspannungsstufe 233 desorbieren weitere in Druckentspannungsstufe 224 nicht desorbierte Wertgase sowie CO₂, während HCN, Mercaptane sowie H₂S und COS weitgehend in Methanol gebunden bleiben. In Druckentspannungsstufe 233 desorbiertes Wertgas und CO₂ werden über Leitung 234 abgezogen und über einen Kompressor 235 vorverdichtet. Vorverdichtetes Recycle-Gas gelangt anschließend über Leitung 236 in Wärmeaustauscher 230, in dem es zum Vorwärmen des beladenen ersten Waschmittels aus Leitung 229 genutzt wird. Anschließend gelangt das vorverdichtete Recycle-Gas über Leitung 226 in Kompressor 227 und wird dadurch zusammen mit Recycle-Gas aus Leitung 225 auf Absorptionsdruck zurückverdichtet. Im Sinne der Erfindung stellen Recycle-Gase aus Leitung 234 sowie 225 die "zweite Gaskomponente" dar, während die "erste Gaskomponente" nach Durchlaufen der Druckentspannungseinheit in Methanol gebunden bleibt.

Aus der zweiten Druckentspannungsstufe 233 abgezogenes beladenes erstes Waschmittel, welches nunmehr HCN, Mercaptane sowie H₂S und COS in physikalisch an Methanol gebundener (absorbierter) Form enthält, wird über Leitung 235 abgezogen und zunächst in einem indirekten Wärmeaustauscher 210 vorgeheizt. Die Wärme in Wärmeaustauscher 210 wird durch ein Sauergas aus einem Haupt-Heißregenerator ("weitere Regeneriereinheit im Sinne der Erfindung, nicht gezeigt) auf das beladene Methanol aus Leitung 235 übertragen. Besagtes Sauergas wurde durch Heißregenerieren des Methanols aus der zweiten und dritten Waschstufe erhalten und wird dem Wärmeaustauscher 210 über Leitung 211 zugeführt. Durch den Wärmeaustauch erwärmtes Methanol gelangt über Leitung 212, Druckminderungsventil 213 und Leitung 214 in den Heißregenerator 215 ("dedizierte Regeneriereinheit" im Sinne der Erfindung). Heißregenerator 215 verfügt über einen Aufkocher 216, welcher über Leitung 217 aus dem Heißregenerator abgezogenes Methanol zum Sieden erhitzt und über Leitung 218 in den Heißregenerator 215 zurückführt. Durch Methanoldampf ausgetriebene Gase ("Erste Gaskomponente" = HCN, Mercaptane, H₂S und COS) verlassen den Heißregenerator 215 über Leitung 219 und werden mit aus dem Haupt-Heißregenerator stammenden, in Wärmeaustauscher 210 abgekühlten Sauergasen aus Leitung 220 in Leitung 221 zusammengeführt. Sauergase in Leitung 221 werden in einem Abscheider von Methanol befreit und anschließend beispielsweise einer Claus-Anlage (nicht gezeigt) zur Rückgewinnung von Schwefel zugeführt. Regeneriertes Methanol wird aus dem Heißregenerator 215 über Leitung 222 abgezogen und einer destillativen Reinigung zugeführt (nicht gezeigt).

Aufgrund der erfindungsgemäßen Verfahrensführung gelangen nahezu keine Wertgase (H₂, CO) sowie nahezu kein CO₂ über den Heißregenerator ("dedizierte Regeneriereinheit" im Sinne der Erfindung) in Leitung 219, wodurch die Kohlenstoff-"Belastung" für einen nachgeschalteten Claus-Prozess sinkt. Da von vorneherein weniger Gase, welche stattdessen dem Recycle-Gas-Strom in Leitung 228 zugeführt werden, in den Heißregenerator 215 gelangen, ist dieser einer geringeren Gasbelastung ausgesetzt und kann entsprechend kleiner als herkömmlich ausgelegt werden.

Aus der zweiten und dritten Waschstufe stammende Recycle-Gas-Ströme können in vorteilhafter Weise gemeinsam mit Recycle-Gas-Strom in Leitung 226 zusammengeführt und gemeinsam in Kompressor 227 auf Absorptionsdruck zurückverdichtet werden, um einen zusätzlichen Kompressor einzusparen.

Das folgende Zahlenbeispiel zeigt einen Vergleich zwischen der Verfahrensführung gemäß Stand der Technik (Figur 1, Vergleichsbeispiel) und der Verfahrensführung gemäß Erfindung (Figur 2, erfindungsgemäßes Beispiel). Ausgegangen wurde von einem Rohsynthesegas bei einem Absorptionsdruck von 32 barg und einem Volumenstrom Rohsynthesegas von 285 000 Nm³/h mit folgender Zusammensetzung:

| Komponente im Rohsynthesegas | Anteil in mol-% |
|---|---|
| H₂ | 55,75 |
| CO | 0,472 |
| CO₂ | 43,26 |
| CH₄ | 0,01 |
| N₂ | 0,39 |
| Ar | 0,02 |
| COS | <0,01 |
| H₂S | 0,09 |
| HCN | ppm range |
| Mercaptane | ppm range |

Wie für den Fachmann zu erkennen handelt es sich aufgrund der Zusammensetzung um ein "geshiftetes" Rohsynthesegas, das heißt ein Synthesegas, welches einer Wassergas-Shift-Reaktion zur Umsetzung von CO mit H₂O zu CO₂ und H₂ zur Steigerung der Wasserstoff-Ausbeute unterzogen wurde.

Die in folgender Tabelle gezeigten Werte wurden mit der Simulationssoftware "Aspen Plus" berechnet. Sie zeigen die CO- und H₂-Rückgewinnung bei Verwendung einer Druckentspannungseinheit gemäß erfindungsgemäßem Beispiel (Figur 2) in Bezug auf das erste Waschmittel aus der ersten Waschmittel-Stufe. Im Vergleichsbeispiel gemäß Figur 1 liegt die CO- und H₂-Rückgewinnung in Bezug auf das erste Waschmittel aus der ersten Waschmittelstufe bei "null". Die Prozent-Angaben beziehen sich auf die gesamte recycelte Gas-Menge, welche in das Rohsynthesegas zurückgeführt wurde. Zu reinen Informationszwecken wurden auch die Werte für die zweite und dritte Waschmittelstufe angegeben.

| Erfindungsgemäßes Beispiel (Figur 2): | CO-Rückgewinnung | H₂-Rückgewinnung |
|---|---|---|
| Erste Waschmittelstufe | 0,6% | 0,4% |
| Zweite Waschmittelstufe | 34,8% | 30,6% |
| Dritte Waschmittelstufe | 64,7% | 69,1% |

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Anspruchstyp gehören, auch jede Kombination zwischen Merkmalen in Bezug auf verschiede Arten von Gegenständen oder Anspruchstypen in Betracht gezogen werden kann. Alle Merkmale können kombiniert werden um synergetische Effekte zu erzielen, welche über die einfache Summierung der technischen Merkmale hinausgehen.

Während die Erfindung im Detail in den Zeichnungen und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnungen, der Offenbarung und der abhängigen Ansprüche verstanden und ausgeführt werden.

In den Ansprüchen schließt das Wort "aufweisend" oder "umfassend" weitere Elemente oder Schritte nicht aus, und der unbestimmte Artikel "ein" oder "eine" schließt eine Mehrzahl nicht aus. Bezugszeichen in den Ansprüchen sollten nicht so ausgelegt werden, dass sie den Umfang der Ansprüche einschränken.

### Bezugszeichenliste

- 100: Vorrichtung, Verfahren (Vergleichsbeispiel)
- 101: Absorptionsvorrichtung
- 102: Leitung
- 103: Leitung
- 104: Kaminboden
- 105: Leitung
- 106: Leitung
- 107: Leitung
- 108: Leitung
- 109: Leitung
- 110: Indirekter Wärmeaustauscher
- 111: Leitung
- 112: Leitung
- 113: Druckminderungsventil
- 114: Leitung
- 115: Heißregenerator
- 116: Aufkocher
- 117: Leitung
- 118: Leitung
- 119: Leitung
- 120: Leitung
- 121: Leitung
- 122: Leitung

- 200: Vorrichtung, Verfahren (Erfindung)
- 201: Absorptionsvorrichtung
- 202: Leitung
- 203: Leitung
- 204: Kaminboden
- 205: Leitung
- 206: Leitung
- 207: Leitung
- 208: Leitung
- 209: Leitung
- 210: Indirekter Wärmeaustauscher
- 211: Leitung
- 212: Leitung
- 213: Druckminderungsventil
- 214: Leitung
- 215: Heißregenerator
- 216: Aufkocher
- 217: Leitung
- 218: Leitung
- 219: Leitung
- 220: Leitung
- 221: Leitung
- 222: Leitung
- 223: Druckminderungsventil
- 224: Druckentspannungsstufe
- 225: Leitung
- 226: Leitung
- 227: Kompressor
- 228: Leitung
- 229: Leitung
- 230: Indirekter Wärmeaustauscher
- 231: Leitung
- 232: Druckminderungsventil
- 233: Druckentspannungsstufe
- 234: Leitung
- 235: Kompressor
- 236: Leitung

## Patentansprüche

1. Verfahren zur Regenerierung eines beladenen Waschmittels aus einer physikalisch wirkenden Gaswäsche,
bei dem die Gaswäsche mehrere Waschstufen in einer Absorptionsvorrichtung zur selektiven Entfernung unerwünschter Gasbestandteile aus einem Rohsynthesegas umfasst,
wobei in einer ersten Waschstufe ein erstes mit einer ersten Gaskomponente und zumindest einer zweiten Gaskomponente beladenes Waschmittel erhalten wird und
das erste beladene Waschmittel aus der Absorptionsvorrichtung abgezogen und getrennt von weiteren Waschmitteln aus weiteren Waschstufen einer dedizierten Regeneriereinheit zur Abtrennung der ersten Gaskomponente aus dem ersten beladenen Waschmittel zugeführt wird,
wobei ein erstes regeneriertes Waschmittel erhalten wird,
**dadurch gekennzeichnet, dass**
das erste beladene Waschmittel nach dem Abziehen aus der Absorptionsvorrichtung einer ersten Druckentspannungseinheit zugeführt wird, bevor es der Regeneriereinheit zugeführt wird.

2. Verfahren nach Anspruch 1, **dadurch gekennzeichnet, dass** das erste beladene Waschmittel vor dem Zuführen zur Regeneriereinheit erwärmt wird, vorzugsweise durch aus einer weiteren Regeneriereinheit abgezogene Sauergase erwärmt wird.

3. Verfahren nach Anspruch 1 oder 2, **dadurch gekennzeichnet, dass** die erste Druckentspannungseinheit zwei, optional mehr als zwei hintereinandergeschaltete Druckentspannungsstufen aufweist, wobei das erste beladene Waschmittel in der ersten Druckentspannungsstufe vorzugsweise auf einen Druck entspannt wird, der um einen Faktor von 1,5 bis 4 kleiner ist als der in der Absorptionsvorrichtung vorherrschende Druck, und in der zweiten Druckentspannungsstufe vorzugsweise auf einen Druck entspannt wird, der um einen Faktor von 1,5 bis 4 kleiner ist als der in der ersten Druckentspannungsstufe vorherrschende Druck.

4. Verfahren nach Anspruch 3, **dadurch gekennzeichnet, dass** eine Druckentspannungsstufe einen Flash-Behälter umfasst.

5. Verfahren nach einem der vorherigen Ansprüche, **dadurch gekennzeichnet, dass** das erste beladene Waschmittel Cyanwasserstoff (HCN) und/oder Mercaptane sowie optional Schwefelwasserstoff (H₂S) und/oder Carbonylsulfid (COS) als erste Gaskomponente enthält.

6. Verfahren nach einem der vorherigen Ansprüche, **dadurch gekennzeichnet, dass** bei der Druckentspannung als zweite Gaskomponente freigesetzte Wertgase, insbesondere Wasserstoff (H₂) und/oder Kohlenmonoxid (CO), aus der ersten Druckentspannungseinheit abgezogen, anschließend verdichtet und zur Absorptionsvorrichtung zurückgeführt werden.

7. Verfahren nach einem der vorherigen Ansprüche, **dadurch gekennzeichnet, dass** die weiteren Waschstufen zumindest eine zweite und eine dritte Waschstufe umfassen, wobei in der zweiten Waschstufe ein zweites beladenes Waschmittel erhalten wird und in der dritten Waschstufe ein drittes beladenes Waschmittel erhalten wird.

8. Verfahren nach Anspruch 7, **dadurch gekennzeichnet, dass** das zweite beladene Waschmittel einer zweiten Druckentspannungseinheit zugeführt wird, und das dritte beladene Waschmittel einer dritten Druckentspannungseinheit zugeführt wird, und aus der zweiten und dritten Druckentspannungseinheit abgezogene Wertgase, insbesondere Wasserstoff (H₂) und/oder Kohlenmonoxid (CO), mit den aus der ersten Druckentspannungseinheit abgezogenen Wertgasen zusammengeführt, anschließend verdichtet und zur Absorptionsvorrichtung zurückgeführt werden.

9. Verfahren nach Anspruch 7 oder 8, **dadurch gekennzeichnet, dass** in der zweiten Waschstufe ein zumindest mit Schwefelwasserstoff (H₂S) sowie optional Carbonylsulfid (COS) beladenes zweites beladenes Waschmittel erhalten wird und in der dritten Waschstufe ein zumindest mit Kohlendioxid (CO₂) beladenes drittes beladenes Waschmittel erhalten wird.

10. Verfahren nach einem der vorherigen Ansprüche, **dadurch gekennzeichnet, dass** das Waschmittel ausgewählt ist aus der Gruppe umfassend Methanol, *N*-Methyl-2-pyrrolidion (NMP), Polyethylenglykol dimethylether (DMPEG), n-Oligoethylenglycol-methyl-isopropylether (MPE), *N*-Methylcaprolactam (NMC) oder Kombinationen davon.

11. Verfahren nach einem der vorherigen Ansprüche, **dadurch gekennzeichnet, dass** die Regeneriereinheit eine Vorrichtung zum Strippen und/oder Heißregenerieren umfasst, vorzugsweise eine Vorrichtung zum Heißregenerieren umfasst.

12. Verfahren nach einem der vorherigen Ansprüche, **dadurch gekennzeichnet, dass** in der Regeneriereinheit abgetrennte Gaskomponenten von mitausgetriebenem Waschmittel durch Kondensation des Waschmitteldampfs befreit werden, und die abgetrennten Gaskomponenten, insbesondere aufweisend Cyanwasserstoff (HCN) und/oder Mercaptane sowie optional Schwefelwasserstoff (H₂S), einer Schwefel-Rückgewinnungsanlage zugeführt werden.

13. Verfahren nach einem der vorherigen Ansprüche, **dadurch gekennzeichnet, dass** das erste regenerierte Waschmittel aus der Regeneriereinheit abgezogen und einer destillativen Reinigung unterzogen wird.

14. Vorrichtung für eine physikalisch wirkende Gaswäsche, aufweisend eine Mehrzahl von Waschstufen in einer Absorptionsvorrichtung, wobei in der Mehrzahl von Waschstufen unerwünschte Gasbestandteile durch Absorption durch ein Waschmittel aus einem Rohsynthesegas selektiv entfernbar sind;
eine dedizierte Regeneriereinheit, wobei zwischen der dedizierten Regeneriereinheit und einer ersten der Mehrzahl von Waschstufen eine Fluidverbindung besteht, so dass in der dedizierten Regeneriereinheit ausschließlich im Waschmittel der ersten Waschstufe absorbierte Gasbestandteile entfernbar sind,
**dadurch gekennzeichnet, dass**
zwischen der ersten Waschstufe und der dedizierten Regeneriereinheit eine erste Druckentspannungseinheit mit Fluidverbindung zur ersten Waschstufe und zur dedizierten Regeneriereinheit angeordnet ist.

15. Vorrichtung nach Anspruch 14, **dadurch gekennzeichnet, dass** zwischen der ersten Druckentspannungseinheit und der Absorptionsvorrichtung über Fluidverbindungen ein Kompressor zum Verdichten von aus der ersten Druckentspannungseinheit abziehbaren Wertgasen, insbesondere Wasserstoff (H₂) und/oder Kohlenmonoxid (CO), angeordnet ist, so dass verdichtete Wertgase zur Absorptionsvorrichtung zurückführbar sind.

16. Vorrichtung nach Anspruch 14 oder 15, **dadurch gekennzeichnet, dass** die Absorptionsvorrichtung eine zweite und eine dritte Waschstufe aufweist, und zwischen der zweiten Waschstufe und dem Kompressor über Fluidverbindungen eine zweite Druckentspannungseinheit angeordnet ist, sowie zwischen der dritten Waschstufe und dem Kompressor über Fluidverbindungen eine dritte Druckentspannungseinheit angeordnet ist, so dass verdichtete Wertgase aus der ersten Druckentspannungseinheit, der zweiten Druckentspannungseinheit, und der dritten Druckentspannungseinheit gemeinsam zur Absorptionseinheit zurückführbar sind.
